# EUROPEAN PATENT APPLICATION

(11) **EP 2 575 381 A2**
(43) Date of publication of application: **03.04.2013**
(21) Application number: 11777286.3
(22) Date of filing: 13.07.2011
(51) Int. Cl.: H04W 4/14, H04W 4/16

(54) **METHOD AND DEVICE FOR COMMUNICATION**

(71) Applicant: Huawei Device Co., Ltd., Longgang District Shenzhen Guangdong 518129 (CN)
(72) Inventor: ZHU, Shujuan, Guangdong 518129 (CN)
(74) Representative: Barth, Stephan Manuel
(86) International application number: PCT/CN2011/077109
(87) International publication number: WO 2011/137867

(57) **Abstract**

The present invention relates to a method for processing a channel conflict between services and a communication device. The method includes: when a service channel required by a first service initiated by a user is occupied, saving information required for processing the first service; and when the service channel is released, processing the first service according to the saved information required for processing the first service. By using the method or device, the case where a service is directly interrupted when a service channel is occupied is prevented, and user experience is enhanced.

## Description

### FIELD OF THE INVENTION

The present invention relates to a communications technology field, and in particular, to a method and a device for communication.

### BACKGROUND OF THE INVENTION

With the development of communications technologies, more and more communication devices such as mobile phones can perform communication services such as short message sending at the background and release the interfaces and provide them to users for other operations. In this manner, users are able to use the released interfaces for other operations. However, when the other operations that users want to perform occupy the same service channel with the services such as short message sending that are switched to the background for processing, certain problems may occur due to channel conflicts.

The following takes the case that a terminal switches sending of a short message to the background to process and the user wants to use the released interface to initiate a call when the background is still sending the short message as an example for description. Generally, short message sending and call use a same service channel. In the preceding case, because the service channel is occupied by short message sending, the call fails. According to a call processing method in the prior art, when the preceding case occurs, generally a terminal user is directly prompted that a call failed, and the user has to perform the operation of initiating the call again, resulting in poor user experience.

### SUMMARY OF THE INVENTION

Considering the preceding drawback of the prior art, the embodiments of the present invention propose a method and a device for communication to solve the technical problem of channel conflict between services.

An embodiment provides a method for communication, including: when a service channel required by a first service initiated by a user is occupied, saving information required for processing the first service; and after the service channel is released, processing the first service according to the saved information required for processing the first service.

An embodiment provides a device for communication, including: a first processing module, configured to: when a service channel required by a first service initiated by a user is occupied, save information required for processing the first service, and after the service channel is released, process the first service according to the saved information required for processing the first service; and a saving module, connected to the first processing module, and configured to save the information required for processing the first service.

In the technical solutions in the embodiments of the present invention, when a service channel required by a first service initiated by a user is occupied, information required for processing the first service is saved, and after the service channel is released, the first service is processed according to the saved information required for processing the first service, therefore, when the first service initiated by the user encounters a communication channel conflict with other ongoing service operations such as an ongoing service operation at the background, a failure of the first service due to direct interruption is prevented, and the first service is held and the service is completed in time when the required service channel is available, so that the user does not need to repetitively initiates the operation of the first service, thereby enhancing user experience.

### BRIEF DESCRIPTION OF THE DRAWINGS

The purpose, features, characteristics, and advantages of the present invention are described clearly through the following detailed description with the drawings.

FIG. 1 is a flowchart of a method for communication according to an embodiment of the present invention;

FIG. 2 shows a specific example of using the method for communication according to an embodiment of the present invention to process a channel conflict between a call service and a short message sending service; and

FIG. 3 shows a device for communication according to an embodiment of the present invention.

### DETAILED DESCRIPTION OF THE EMBODIMENTS

The following describes each embodiment of the present invention in detail with the drawings.

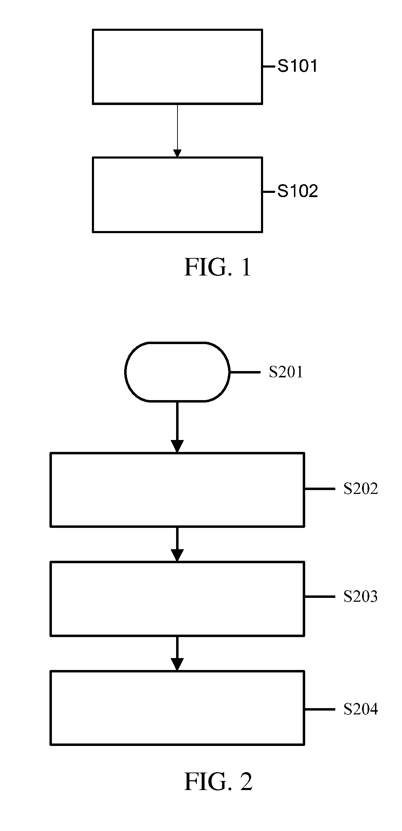

FIG. 1 is a flowchart of a method for communication according to an embodiment of the present invention. As shown in FIG. 1, the method for communication according to an embodiment of the present invention includes the following steps:

Step S101: When a service channel required by a first service initiated by a user is occupied, save information required for processing the first service.

Step S102: After the service channel is released, process the first service according to the saved information required for processing the first service. By using the method provided in this embodiment, a channel conflict between services may be processed. When the first service initiated by the user encounters a communication channel conflict with other ongoing service operations such as an ongoing service operation at the background, direct interruption of the first service is prevented, and the first service is completed in time when the channel is available.

Those skilled in the art should understand that the method in this embodiment may further include:
when the service channel required by the first service initiated by the user is occupied, notifying a first processing module that processes the first service that the service channel required by the first service is occupied; and
after the service channel is released, notifying the first processing module that the service channel required by the first service is released.

Those skilled in the art should understand that the method in this embodiment may further include:
after processing a second service that occupies the service channel required by the first service initiated by the user is complete, releasing, by a control module, the service channel required by the first service, and after the service channel required by the first service is released, notifying the first processing module of a message that the service channel required by the first service is released.

Those skilled in the art should understand that the method in this embodiment may further include:
after processing a second service that occupies the service channel required by the first service initiated by the user is complete, releasing, by a control module, the service channel required by the first service, and after the service channel required by the first service is released, notifying a second processing module of a message that the service channel required by the first service is released, where the second processing module is configured to process the second service that occupies the service channel required by the first service; and
notifying, by the second processing module, the first processing module of the message that the service channel required by the first service is released.

Those skilled in the art should understand that, the method in this embodiment may further include: when the service channel required by the first service initiated by the user is occupied, prompting the user to wait.

Those skilled in the art should understand that, the service channel required by the first service initiated by the user may be occupied by the second service. As an example, the second service may be a short message sending service. As an example, the first service may be a call service, an Internet dial-up service, or other data service.

FIG. 2 shows a specific example of using the method according to the embodiment of the present invention to process a channel conflict between a call service and a short message sending service. In this specific example, the first service is the call, the information required for processing the first service includes a called number of the call, and the service (a second service) that occupies the service channel required by the first service is the short message sending service. In this example, the call service and the short message sending service use a same service channel. The method in this example may be executed by a device for communication, for example, a communication terminal such as a mobile phone.

As shown in FIG. 2, the example of using the method according to the embodiment of the present invention to process a channel conflict between the call service and the short message sending service includes:

In step S201, a user initiates a call. In step S202, when a service channel required by the call is occupied, save information required for processing the call service, and prompt the user to wait; otherwise, when the service channel required by the call is not occupied, a communication device starts to use the service channel to request the call from a network side. In step S203, after short message sending ends and the service channel required by the call is released, the communication device may perform the call according to the saved information required for processing the call service, for example, a called number of this call. Then, in step S204, the communication device starts to request the call toward the network side, for example, starts to request the call toward the network side through its radio frequency port. Those skilled in the art should understand that, in the specific implementation, a saving module may be set in the communication device to store the information required for processing the call service, for example, store the called number of the call.

In an embodiment of the present invention, in a device for radio communication, after a user initiates a call, a corresponding call processing module for processing the call service requests a control module for a service channel that is required for establishing the call; when the service channel required by the call is occupied, the control module notifies the call processing module that the service channel is occupied; after receiving the notification, the call processing module saves information required for processing the call service, for example, a called number of this call, and prompts the user to wait; after short message sending is complete, a short message processing module requests the control module to releas the service channel; the control module, according to the request of the short message processing module, releases the channel occupied by it, and sends a message that the service channel is released to the short message processing module; after receiving the message that the service channel is released, the short message processing module notifies the call processing module that the service channel required by the call service is released; after receiving the notification, the call processing module uses the saved called number to continue to perform the call service, for example, to request the control module for the channel that is required for establishing the call, and to request the call toward the network side after the required channel is successfully established.

As an example, the short message processing module may notify the call processing module that the channel required by a call performed by it is released by directly forwarding the message that the channel is released sent by the control module to the call processing module.

In other embodiments, the control module may notify the message that the service channel required by the call processing module is released to the call processing module.

In an embodiment, after learning that the service channel required by it is occupied, the call processing module does not attempt to use this service channel to initiate a service any more, but waits for the channel to be released.

In specific implementation, the preceding control module may implement the preceding control function according to a pre-stored protocol for management of channels, such as establishment and release.

As an example, when prompting the user to wait, the communication device may prompt the user through a user interface. For example, but not as a restriction, prompt information may be "A short message is being sent, please wait..." By prompting the user to wait, the user may know the reason why the current call cannot be immediately connected, thereby further enhancing user experience.

By using the method in this embodiment to perform call processing, when a user initiates a call and the call channel is occupied, the case that the call directly fails and a prompt of a call failure is directly prompted to the user so that the user has to initiate the call again is prevented; instead, the call is held temporarily by keeping the information about the call, and the call is implemented in time after the call channel is released. In this way, the user may implement the call without the need to perform the operation of initiating the call again, bringing convenience to the user.

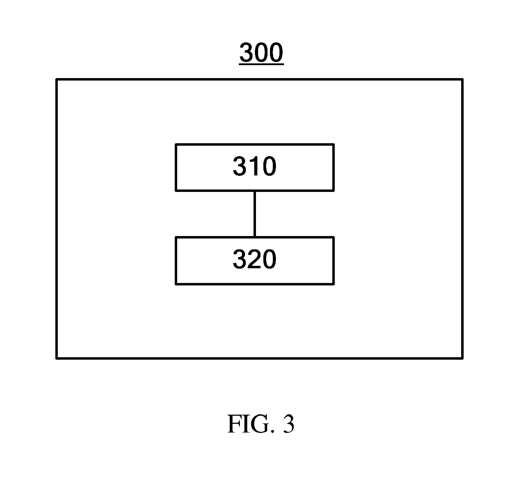

FIG. 3 shows a device for communication according to an embodiment of the present invention. As shown in FIG. 3, the device for communication 300 includes: a first processing module 310, configured to: when a service channel required by a first service initiated by a user is occupied, save information required for processing the first service, and after the service channel is released, process the first service according to the saved information required for processing the first service; and a saving module 302, connected to the first processing module, configured to save the information required for processing the first service.

The device for communication may further include:
a control module, configured to, when the service channel required by the first service is occupied, notify the first processing module that the service channel required by the first service is occupied.

In the device for communication, the control module is further configured to: after processing a second service that occupies the service channel required by the first service initiated by the user is complete, release the service channel required by the first service, and after the service channel required by the first service is released, notify the first processing module of a message that the service channel required by the first service is released.

The device for communication may further include:
a second processing module, configured to process the second service that occupies the service channel required by the first service initiated by the user;
the control module is further configured to: after the second service is complete, release the service channel required by the first service, and after the service channel required by the first service is released, notify the second processing module of a message that the service channel required by the first service is released; and
the second processing module is further configured to notify the first processing module of the message that the service channel required by the first service is released.

The device for communication may further include: a prompting module, configured to prompt the user to wait when the service channel required by the first service is occupied.

The first service may be a call; the information required for processing the first service may include: a called number of the call.

The second service that occupies the service channel required by the first service when the user initiates the first service may be a short message sending service.

When the first service is the call, the first processing module may be a call processing module. After the service occupied the call channel ends, for example, a short message sending service, the processing module of the second service, for example, a short message processing module, may notify the call processing module that the call channel is released.

As an example, the saving module may be a cache or any other storage medium.

Those skilled in the art should understand that, the method and device in the embodiments of the present invention are not confined to solve the problem that occurs when the call and short message sending services encounter a service channel conflict but are also able to solve the problem that occurs when the call or short message sending service and other services such as a data service and an Internet dial-up access service, or other services encounter a service channel conflict between each other.

Those skilled in the art should understand that, each module included in the device 300 may be implemented by using a means, such as software, hardware, or combination of software and hardware.

This embodiment further provides a machine-readable storage medium with an executable instruction stored thereon, where, when the executable instruction is executed, ,the machine is enabled to implement a method for communication, and the method includes the following steps: when the service channel required by the first service initiated by the user is occupied, saving information required for processing the first service; and after the service channel is released, processing the first service according to the saved information required for processing the first service.

The method may further include the following steps:
when the service channel required by the first service initiated by the user is occupied, notifying a first processing module that processes the first service that the service channel required by the first service is occupied; and
after the service channel is released, notifying the first processing module that the service channel required by the first service is released.

The method may further include the following step:
after processing a second service that occupies the service channel required by the first service initiated by the user is complete, releasing, by a control module, the service channel required by the first service, and after the service channel required by the first service is released, notifying the first processing module of a message that the service channel required by the first service is released.

Where, the method may further include the following steps:
after processing the second service that occupies the service channel required by the first service initiated by the user is complete, releasing, by a control module, the service channel required by the first service, and after the service channel required by the first service is released, notifying a second processing module of the message that the service channel required by the first service is released, where the second processing module is configured to process the second service that occupies the service channel required by the first service; and
notifying, by the second processing module, the first processing module of the message that the service channel required by the first service is released. The method may further include the following step: when the service channel required by the first service initiated by the user is occupied, prompting the user to wait.

The first service may be a call; the information required for processing the first service may include: a called number of the call.

The service that occupies the service channel required by the first channel initiated by the user may be a short message sending service.

Those skilled in the art should understand that, various variations and changes may be made to the method and apparatus disclosed in each embodiment of the present invention without departing from the essence of the present invention. These variations and changes shall fall within the protection scope of the present invention. Therefore, the protection scope of the present invention is defined by the attached claims.

## Claims

1. A method for communication, comprising:
when a service channel required by a first service initiated by a user is occupied, saving information required for processing the first service; and
after the service channel is released, processing the first service according to the saved information required for processing the first service.

2. The method according to claim 1, further comprising:
when the service channel required by the first service initiated by the user is occupied, notifying a first processing module that processes the first service that the service channel required by the first service is occupied; and
after the service channel is released, notifying the first processing module that the service channel required by the first service is released.

3. The method according to claim 2, further comprising:
after processing a second service that occupies the service channel required by the first service initiated by the user is complete, releasing, by a control module, the service channel required by the first service, and after the service channel required by the first service is released, notifying the first processing module of a message that the service channel required by the first service is released.

4. The method according to claim 2, further comprising:
after processing a second service that occupies the service channel required by the first service initiated by the user is complete, releasing, by a control module, the service channel required by the first service, and after the service channel required by the first service is released, notifying a second processing module of a message that the service channel required by the first service is released, wherein the second processing module is configured to process the second service that occupies the service channel required by the first service initiated by the user; and
notifying, by the second processing module, the first processing module of the message that the service channel required by the first service is released.

5. The method according to claim 1, further comprising:
prompting the user to wait when the service channel required by the first service initiated by the user is occupied.

6. The method according to claim 1, wherein the first service is a call; the information required for processing the first service comprises: a called number of the call.

7. The method according to any one of claims 1 to 6, wherein, the second service that occupies the service channel required by the first service initiated by the user is a short message sending service.

8. A device for communication, comprising:
a first processing module, configured to: when a service channel required by a first service initiated by a user is occupied, save information required for processing the first service; and after the service channel is released, process the first service according to the saved information required for processing the first service; and
a saving module, connected to the first processing module, and configured to save the information required for processing the first service.

9. The device according to claim 8, further comprising:
a control module, configured to, when the service channel required by the first service is occupied, notify the first processing module that the service channel required by the first service is occupied.

10. The device according to claim 9, wherein:
the control module is further configured to: after processing a second service that occupies the service channel required by the first service initiated by the user is complete, release the service channel required by the first service, and after the service channel required by the first service is released, notify the first processing module of a message that the service channel required by the first service is released.

11. The device according to claim 9, further comprising:
a second processing module, configured to process a second service that occupies the service channel required by the first service initiated by the user; the control module is further configured to: after the second service is complete, release the service channel required by the first service, and after the service channel required by the first service is released, notify the second processing module of a message that the service channel required by the first service is released; and
the second processing module is further configured to notify the first processing module of the message that the service channel required by the first service is released.

12. The device according to claim 8, further comprising:
a prompting module, configured to prompt the user to wait when the service channel required by the first service initiated by the user is occupied.

13. The device according to claim 8, wherein the first service is a call; the information required for processing the first service comprises: a called number of the call.

14. The device according to any one of claims 8 to 13, wherein, the second service that occupies the service channel required by the first service initiated by the user is a short message sending service.

15. A machine-readable storage medium with an executable instruction stored thereon, wherein, when the executable instruction is executed, the machine is enabled to execute steps in any one claim of claims 1 to 7.
